# EUROPEAN PATENT APPLICATION

(11) **EP 2 800 263 A1**
(43) Date of publication of application: **05.11.2014**
(21) Application number: 12862700.7
(22) Date of filing: 26.12.2012
(51) Int. Cl.: H02M 3/28

(54) **SWITCHING POWER SUPPLY DEVICE AND AIR CONDITIONER**

(30) Priority: 28.12.2011 JP 2011290043
(71) Applicant: Mitsubishi Heavy Industries, Ltd., Tokyo 108-8215 (JP)
(72) Inventor: SHIMIZU, Kenji, Tokyo 108-8215 (JP); SUMITO, Kiyotaka, Tokyo 108-8215 (JP); KANIE, Tetsuo, Tokyo 108-8215 (JP); YOSHIDA, Junichi, Tokyo 108-8215 (JP)
(74) Representative: Intès, Didier Gérard André
(86) International application number: PCT/JP2012/083739
(87) International publication number: WO 2013/099991

(57) **Abstract**

For a load circuit (10c) having a load (14) requiring electric power supply at the time of a stand-by operation mode, an output voltage is set to 5 V that is the lowest voltage of the voltage of a supply load which is required at the time of the stand-by operation mode. Further, in the load circuit (10c), for a load (15) requiring a load voltage higher than the output voltage of 5 V at the time of a normal operation mode, an output voltage is boosted by boosting means such as a boost converter (21) and then supplied. Thus, power consumption at the time of the stand-by operation mode can be reduced.

## Description

### Technical Field

The present invention relates to a switching power supply device and in particular, to a multi-output type switching power supply device that supplies an output voltage to a plurality of load circuits and an air conditioner provided with the multi-output type switching power supply device.

### Background Art

As a switching power supply aimed at a reduction in power consumption during a stand-by operation, for example, a method disclosed in PTL 1 is known.

In a switching power supply disclosed in PTL 1, a reduction in power consumption during a stand-by operation is attained by reducing an output voltage (secondary-side voltage) of the switching power supply at the time of a stand-by operation mode to be lower than an output voltage at the time of a normal operation mode.

Specifically, a first load which is driven at 12 V and a second load which is driven at 5 V are connected to a load circuit of the switching power supply of PTL 1. At the time of the normal operation mode, an output voltage of 12 V is supplied from the switching power supply to the load circuit. The output voltage of 12 V is directly supplied to the first load and is stepped down to 5 V and then supplied to the second load.

Further, at the time of the stand-by operation mode, voltage which is supplied from the switching power supply to the load circuit is reduced to about 6 V. In the load circuit, electric power supply to the first load is cut off and 6 V is stepped down to 5 V and then supplied to the second load.

### Citation List

### Patent Literature

[PTL 1] Japanese Unexamined Patent Application Publication No. 2005-27354

### Summary of Invention

### Technical Problem

In a multi-output type switching power supply in which a plurality of load circuits are provided on the output side of a switching power supply, if the output voltage at the time of the stand-by operation mode is reduced, as disclosed in PTL 1 described above, the following disadvantage occurs.

In the multi-output type switching power supply, if an output voltage in one load circuit is reduced, an output voltage is also reduced in all other load circuits. For example, a case is assumed where in addition to the above-described load circuit (hereinafter referred to as a "first load circuit"), a load circuit (hereinafter referred to as a "second load circuit") to which an output voltage of 20 V is supplied is further provided on the output side of the switching power supply disclosed in PTL 1. In this case, if at the time of the stand-by operation mode, the output voltage of the first load circuit is stepped down from 12 V to about 6 V, as described above, the output voltage of the second load circuit is also stepped down from 20 V to about 10 V. At this time, in a case where a load that requires supply of a voltage higher than or equal to 10 V at the time of the stand-by operation mode is connected to the second load circuit, it does not become possible to supply sufficient electric power to the load.

In this manner, it is difficult for the method disclosed in PTL 1 described above to be applied to the multi-output type switching power supply.

The present invention has an object to provide a switching power supply device and an air conditioner in which in a multi-output type switching power supply device in which a plurality of load circuits are connected to an output side, it is possible to reduce power consumption at the time of a stand-by operation mode.

### Solution to Problem

According to a first aspect of the present invention, there is provided a switching power supply device that is a multi-output type switching power supply device which supplies an output voltage to each of a plurality of load circuits having a normal operation mode and a stand-by operation mode, wherein in at least one of the load circuits, an output voltage is set according to the lowest voltage of voltages of a supply load which is required at the time of the stand-by operation mode, and the output voltage is boosted and supplied in a case where it is necessary to supply a load voltage higher than the output voltage at the time of the normal operation mode.

According to this aspect, output voltages to a load circuit at the time of the stand-by operation mode and the time of the normal operation mode are set to be equal to each other, and in a case where it is necessary to supply a load voltage higher than an output voltage at the time of the normal operation mode, an output voltage is boosted and supplied. Therefore, it is possible to eliminate the disadvantage in the related art in which necessary electric power is not supplied at the time of the stand-by operation mode.

In addition, in PTL 1 described above, step-down from about 6 V to 5 V is also necessary at the time of the stand-by operation mode. However, according to this aspect, it is possible to eliminate the need for a boosting operation with respect to a load that does not require electric power supply at the time of the stand-by operation mode. In this way, it is also possible to expect a reduction in power consumption by stopping boosting means.

The above-mentioned "output voltage" means voltage which is supplied from the switching power supply device to each load circuit, that is, a secondary-side voltage.

For example, the output voltage is set to a voltage higher than or equal to the lowest voltage of the voltage of a supply load that is required at the time of the stand-by operation mode in a load circuit and a voltage lower than the highest voltage of the voltage of the supply load that is required at the time of the stand-by operation mode. More preferably, the output voltage is set to the lowest voltage of the voltage of the supply load that is required at the time of the stand-by operation mode in a load circuit, or the vicinity thereof (for example, a value obtained by adding any voltage value in a range of higher than or equal to about 0.1 V and lower than or equal to 3.0 V to the lowest voltage). As an aspect of a case where the output voltage is set to the vicinity of the voltage of the supply load that is required at the time of the stand-by operation mode in a load circuit, for example, a case can be mentioned where an output voltage is supplied to a load through a regulator. At this time, it is favorable if the output voltage is set in consideration of a voltage drop of the regulator (a value obtained by subtracting the output voltage of the regulator from the input voltage of the regulator). For example, the output voltage is set to a value obtained by adding any voltage value in a range of higher than or equal to about 0.1 V and lower than or equal to 3.0 V to the voltage of the supply load which is required at the time of the stand-by operation mode.

According to a second aspect of the present invention, there is provided an air conditioner including: a motor driving device which is driven by receiving electric power supply from an alternating-current power supply; and the switching power supply device according to Claim 1, which receives electric power supply from the alternating-current power supply, wherein the motor driving device includes a rectifier circuit which rectifies alternating-current power that is supplied from the alternating-current power supply through an alternating-current bus, an inverter circuit which converts direct-current power from the rectifier circuit into alternating-current power and outputs the alternating-current power to a motor, and first switch means which is provided at the alternating-current bus and cuts off electric power supply from the alternating-current power supply to the rectifier circuit, the switching power supply device receives supply of alternating-current power from a place closer to the alternating-current power supply than the first switch means in the alternating-current bus, and the first switch means cuts off electric power supply to the rectifier circuit in the stand-by operation mode.

According to this aspect, in the air conditioner, the motor driving device and the switching power supply device receive electric power supply from the same alternating-current power supply. In this case, since the switching power supply device receives the supply of electric power from a place closer to the alternating-current power supply than the first switch means in the alternating-current bus, even if the first switch means enters an open state and thus the electric power supply to the motor driving device is cut off, it is possible to continuously supply alternating-current power to the switching power supply device. In this way, it is possible to supply standby power to a load that requires electric power supply even at the time of the stand-by operation mode.

The air conditioner described above may further include: a smoothing capacitor which is connected to a direct-current bus that connects the rectifier circuit and the inverter circuit; a fan motor which is connected to the direct-current bus and driven with direct-current power from the direct-current bus as a driving source; a connection wiring which connects a positive pole side of the direct-current bus and a site having the same potential as the positive pole side of the direct-current bus in the switching power supply device; and second switch means which is provided at the connection wiring, wherein in a case of receiving electric power supply from the alternating-current power supply, the second switch means enters an open state, and in a case where electric power supply from the alternating-current power supply is cut off, the second switch means enters a closed state.

According to such an air conditioner, in a period when electric power supply from the alternating-current power supply is cut off for a reason such as a power failure or a current breaker falling, for example, it becomes possible to allow regenerative electric power of the fan motor to escape to the switching power supply device side through the connection wiring. In this way, it is possible to avoid the regenerative electric power being accumulated in the smoothing capacitor, and thus it is possible to prevent an electric shock of a worker.

### Advantageous Effects of Invention

According to the present invention, an effect is exhibited in which it is possible to reduce power consumption during a stand-by operation.

### Brief Description of Drawings

Fig. 1 is a diagram schematically showing a configuration in a case where a switching power supply device according to an embodiment of the present invention is applied to an air conditioner.
Fig. 2 is a diagram schematically showing the configuration of an air conditioner according to a first embodiment of the present invention.
Fig. 3 is a diagram showing another configuration example of the air conditioner according to the first embodiment of the present invention.
Fig. 4 is a diagram schematically showing the configuration of an air conditioner according to a second embodiment of the present invention.
Fig. 5 is a diagram showing another configuration example of the switching power supply device shown in Fig. 1.

### Description of Embodiments

Hereinafter, a switching power supply device according to an embodiment of the present invention will be described with reference to the drawing.

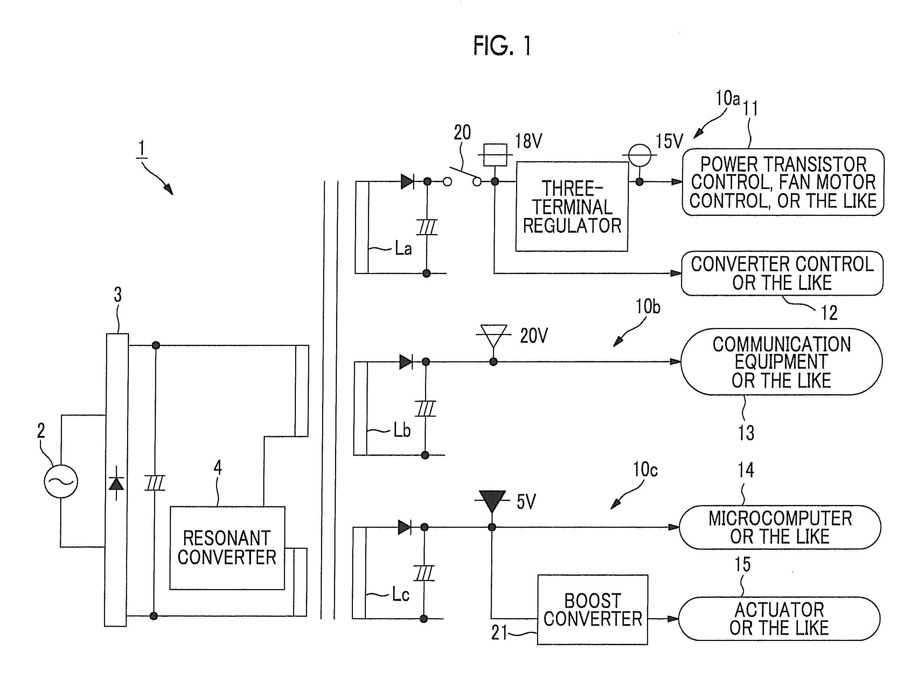

Fig. 1 is a diagram schematically showing a configuration in a case where a switching power supply device according to this embodiment is applied to an air conditioner. As shown in Fig. 1, a switching power supply device 1 is a multi-output type switching power supply device which supplies an output voltage to each of a plurality of load circuits 10a, 10b, and 10c.

The switching power supply device 1 is provided with, for example, a rectifier circuit 3 which converts alternating-current voltage that is supplied from an alternating-current power supply 2 into direct-current voltage, and a resonant converter 4 which converts the direct-current voltage from the rectifier circuit 3 into a high-frequency alternating-current voltage.

The resonant converter 4 is provided with a series resonant circuit in which a primary winding of a transformer, a resonant inductor, and a capacitor are connected in series, and a switching element. The switching element is turned on and off by a high frequency, whereby an electric current having a sine wave shape flows through the primary winding of the transformer and voltage is induced in a secondary winding of the transformer.

Secondary-side windings La, Lb, and Lc are respectively provided to correspond to the respective load circuits 10a, 10b, and 10c and cause induced voltages which are determined according to loads 11 to 15 which are connected to the respective load circuits 10a, 10b, and 10c. The induced voltages generated in the respective secondary windings La, Lb, and Lc are rectified and smoothed, and then supplied to the loads 11 to 15 of the respective load circuits 10a, 10b, and 10c as output voltages.

For example, the loads 11 and 12 of a strong electric system are connected to the load circuit 10a. The load 11 is a load such as a power transistor of an inverter circuit which operates at, for example, 15 V, or a fan motor. The load 12 is a load for power factor improvement such as an active filter of a converter circuit which operates at, for example, 18 V.

The load 13 of a communication system is connected to the load circuit 10b. The load 13 is a load such as communication equipment which operates at, for example, 20 V.

The loads 14 and 15 of a weak electric system are connected to the load circuit 10c. The load 14 is a load such as a microcomputer which operates at, for example, 5 V. The load 15 is a load such as an actuator which operates at, for example, 13 V.

As described above, the load circuits are classified according to the properties of the loads such as a weak electric system, a strong electric system, and a communication system, whereby it becomes possible to vary the respective grounds, and thus it is possible to obtain an effect such as a reduction in noise.

The load circuits 10a, 10b, and 10c have a stand-by operation mode and a normal operation mode. With respect to a load circuit to which a load that requires electric power supply at the time of the stand-by operation mode is connected, the output voltage (secondary-side voltage) of the load circuit is set in accordance with the minimum voltage of voltages which is required at the time of the stand-by operation mode. In contrast, with respect to a load circuit which does not require electric power supply at the time of the stand-by operation mode, an output voltage is appropriately set according to the voltage of a load which is connected to the load circuit.

With respect to an output voltage in each load circuit, the same value is adopted at the time of the normal operation mode and the time of the stand-by operation mode.

In this embodiment, with respect to the load circuit 10a, electric power supply at the time of the stand-by operation mode is not required, and with respect to the load circuits 10b and 10c, electric power supply to some or all of the loads is required even at the time of the stand-by operation mode.

Therefore, with respect to the load circuit 10a, an output voltage is appropriately set. In this embodiment, as an example, the output voltage is set to 18 V in accordance with the load 12, and the output voltage is stepped down by a three-terminal regulator and then supplied to the load 11 which requires a voltage of 15 V.

In contrast, with respect to the load circuits 10b and 10c, an output voltage is set to the lowest voltage of the voltage of a supply load which is required at the time of the stand-by operation mode.

Specifically, in the load circuit 10b, the lowest voltage which is required at the time of the stand-by operation mode is 20 V. Therefore, the output voltage of the load circuit 10b is set to 20 V.

In the load circuit 10c, a load which requires electric power supply at the time of the stand-by operation mode is only the load 14, and the load 15 does not require electric power supply at the time of the stand-by operation mode. Therefore, in the load circuit 10c, the minimum voltage which is required at the time of the stand-by operation mode is 5 V, and thus an output voltage is set to 5 V.

In the load circuit 10c, at the time of the normal operation mode, it is necessary to supply a voltage of 13 V to the load 15. In this manner, in a case where it is necessary to supply a load voltage higher than the output voltage at the time of the normal operation mode, the output voltage is boosted and supplied. For this reason, a boost converter 21 is provided in the load circuit 10c. At the time of the normal operation mode, the output voltage of 5 V is boosted to 13 V by the boost converter 21 and then supplied to the load 15.

In the switching power supply device 1, alternating-current voltage which is supplied from the alternating-current power supply 2 is converted into direct-current voltage by the rectifier circuit 3 and then supplied to the resonant converter 4. In the resonant converter 4, the switching element is controlled to be turned on and off by a high frequency, whereby a high-frequency current having a sine wave shape flows through the primary winding of the transformer. In this way, voltage is induced in the secondary windings of the transformer provided according to the respective load circuits 10a, 10b, and 10c, and the induced voltages are rectified and smoothed, whereby for the load circuit 10a, an output voltage of 18 V is generated, and for the load circuit 10b, an output voltage of 20 V is generated, and for the load circuit 10c, an output voltage of 5 V is generated.

Here, in a case of the time of the normal operation mode, in the load circuit 10a, a switch element 20 enters a closed state, whereby the output voltage of 18 V is directly supplied to the load 12 and the voltage stepped down to 15 V through the three-terminal regulator is supplied to the load 11.

In the load circuit 10b, the output voltage of 20 V is directly supplied to the load 13. In the load circuit 10c, the output voltage of 5 V is directly supplied to the load 14 and is boosted to 13 V by the boost converter 21 and then supplied to the load 15.

In a case of the time of the stand-by operation mode, in the load circuit 10a, the switch element 20 enters an open state, whereby electric power supply to the loads 11 and 12 is cut off.

In the load circuit 10b, similar to the time of the normal operation mode, the output voltage of 20 V is directly supplied to the load 13. Further, in the load circuit 10c, the output voltage of 5 V is directly supplied to the load 14, and an operation of the boost converter 21 is stopped, whereby electric power supply to the load 15 is cut off.

As described above, according to the multi-output type switching power supply device 1 related to this embodiment, since the output voltages of the load circuits 10b and 10c are set in accordance with the lowest voltage of the voltage of a supply load which is required at the time of the stand-by operation mode and in a case where at the time of the normal operation mode, it is necessary to supply a load voltage higher than the output voltage, the output voltage is boosted and supplied, it is possible to eliminate the need for electric power supply to the boost converter 21 and the load 15 at the time of, for example, the stand-by operation mode, and thus it becomes possible to effectively reduce power consumption.

In addition, since an output voltage is not changed at the time of the stand-by operation mode and the time of the normal operation mode, even in a multi-output type switching power supply which performs electric power supply to the plurality of load circuits 10a, 10b, and 10c, it becomes possible to reliably operate the respective loads 11 to 15.

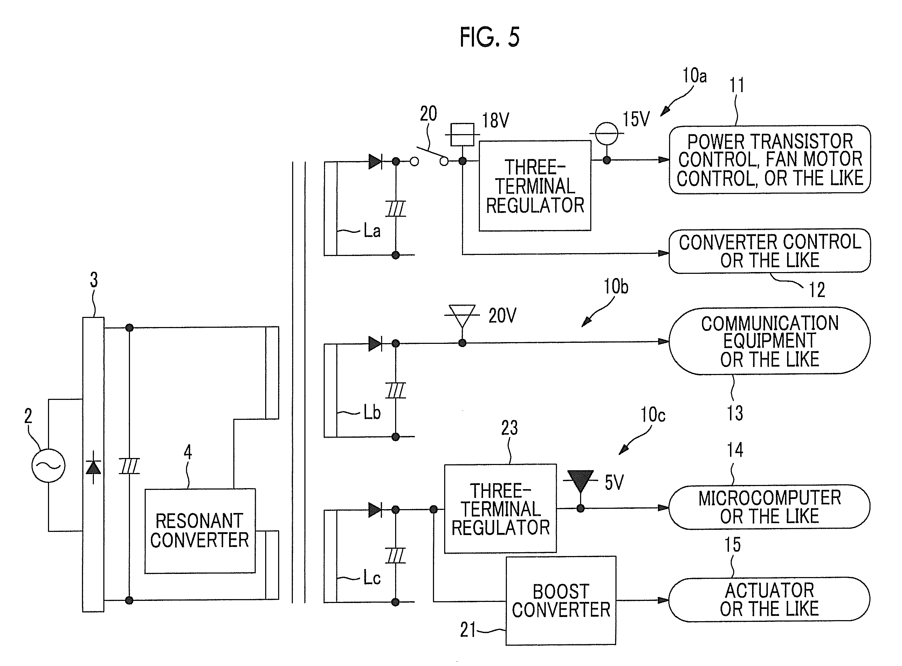

In this embodiment, in the load circuit 10c, the output voltage of 5 V is directly supplied to the load 14. However, in a case where voltage accuracy is required for the load 14, as shown in Fig. 5, an output voltage may be supplied to the load 14 through a three-terminal regulator 23. In this case, the output voltage in the load circuit 10c is set in consideration of a voltage drop of the three-terminal regulator 23. According to the configuration as in Fig. 5, the output voltage of the load circuit 10c is changed into constant voltage by the three-terminal regulator 23, and thus a voltage of 5 V with high accuracy is supplied to the load 14.

### [First Embodiment]

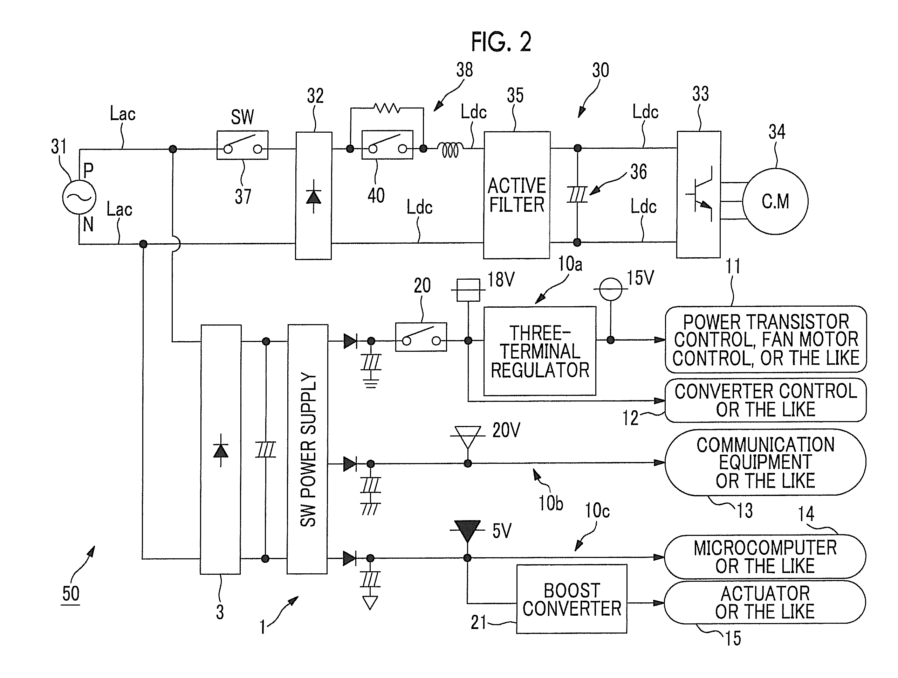

Next, a first embodiment of an air conditioner which is provided with the switching power supply device 1 according to the embodiment of the present invention described above will be described with reference to Fig. 2.

Fig. 2 is a diagram showing a schematic configuration of an air conditioner according to a first embodiment of the present invention. As shown in Fig. 2, in an air conditioner 50, a motor driving device 30 which drives a compressor motor 34 and the switching power supply device 1 receive electric power supply from the same alternating-current power supply 31.

The motor driving device 30 is provided with a rectifier circuit 32 which rectifies alternating-current power from the alternating-current power supply 31, and an inverter circuit 33 which converts direct-current power from the rectifier circuit 32 into alternating-current power and outputs the alternating-current power to the compressor motor 34. Further, an active filter 35 and a smoothing circuit 36 are provided between the rectifier circuit 32 and the inverter circuit 33 for the purpose of power factor improvement and smoothing.

In addition, in the motor driving device 30, a first switch element 37 which cuts off electric power supply from the alternating-current power supply 31 to the rectifier circuit 32 is provided on the P-pole side of an alternating-current bus Lac which connects the alternating-current power supply 31 and the rectifier circuit 32. Further, an inrush current suppression circuit 38 for suppressing an inrush current is provided at a direct-current bus Ldc which connects the rectifier circuit 32 and the inverter circuit 33. The inrush current suppression circuit 38 has a configuration in which a switch element 40 and a resistor 41 are connected in parallel. At the time of start-up, the switch element 40 enters an open state, whereby an electric current flows through the resistor 41, and thus generation of an inrush current is suppressed. If an electric current is reduced and stabilized in this state, the switch element 40 enters a closed state and electric power is supplied through the switch element 40.

Alternating-current power is supplied further from the alternating-current power supply 31 side than the first switch element 37 of the alternating-current bus Lac to the switching power supply device 1. In this way, even in a case where the first switch element 37 enters an open state, whereby electric power supply to the motor driving device 30 is cut off, electric power supply to the switching power supply device 1 is maintained.

In the air conditioner 50, at the time of the normal operation mode, the first switch element 37 and the switch element 40 of the inrush current suppression circuit 38 enter a closed state, whereby electric power from the alternating-current power supply 31 is supplied to the motor driving device 30, and thus a voltage of a predetermined frequency is supplied to the compressor motor 34. In addition, the electric power from the alternating-current power supply 31 is supplied to the respective load circuits 10a, 10b, and 10c through the switching power supply device 1, and thus the respective loads 11 to 15 are operated.

In contrast, at the time of the stand-by operation mode, the first switch element 37 in the motor driving device 30 enters an open state, whereby electric power supply to the motor driving device 30 is cut off. Therefore, electric power supply to the compressor motor 34 is cut off, and thus the compressor motor 34 is stopped. In this way, it is possible to suppress power consumption of the motor driving device 30 at the time of the stand-by operation mode.

Also at the time of the stand-by operation mode, alternating-current power from the alternating-current power supply 31 is continuously supplied to the switching power supply device 1. At this time, the supply of voltage at the time of the stand-by operation mode in the switching power supply device 1 is limited to the load 13 in the load circuit 10b and the load 14 in the load circuit 10c.

As described above, according to the air conditioner 50 related to this embodiment, at the time of the stand-by operation mode, the switch element 37 enters an open state, whereby electric power supply to the motor driving device 30 is cut off. In this way, it is possible to eliminate power consumption of the motor driving device 30 at the time of the stand-by operation mode. In the switching power supply device 1, since electric power supply to the load circuit 10a is cut off, it is possible to eliminate power consumption in the load circuit 10a. In the load circuit 10c, since the driving of the boost converter 21 is stopped, it is possible to eliminate power consumption by the boost converter 21 and the load 15 such as an actuator. As a result, it is possible to suppress power consumption of the air conditioner as a whole at the time of the stand-by operation mode.

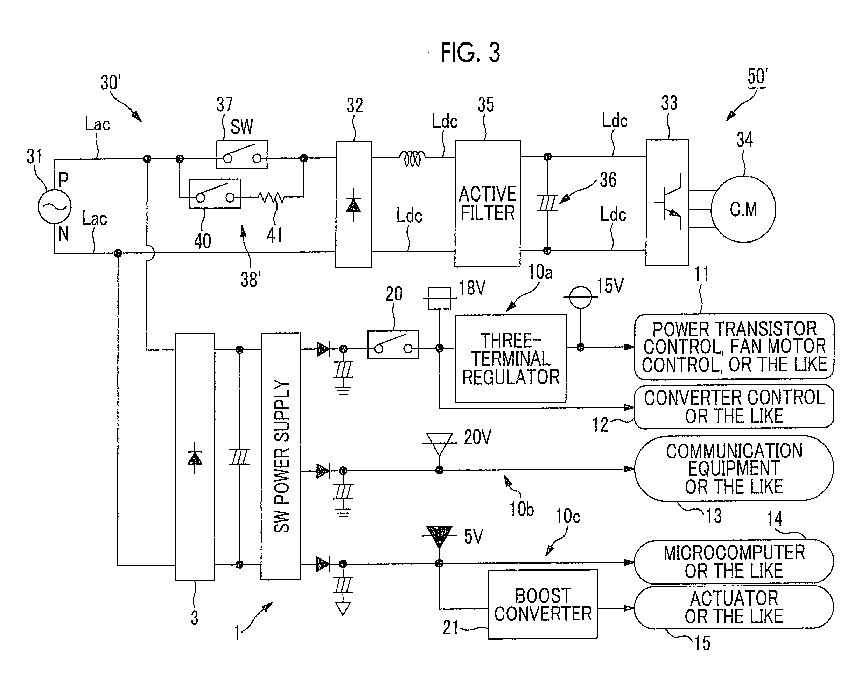

In the motor driving device 30 shown in Fig. 2, the inrush current suppression circuit 38 is provided at the direct-current bus Ldc. However, as shown in Fig. 3, the inrush current suppression circuit may be connected in parallel with the first switch element 37 provided at the alternating-current bus Lac of a motor driving device 30'. In this case, an inrush current suppression circuit 38' has a configuration in which the switch element 40 and the resistor 41 are connected in series.

### [Second Embodiment]

Next, an air conditioner according to a second embodiment of the present invention will be described with reference to the drawing.

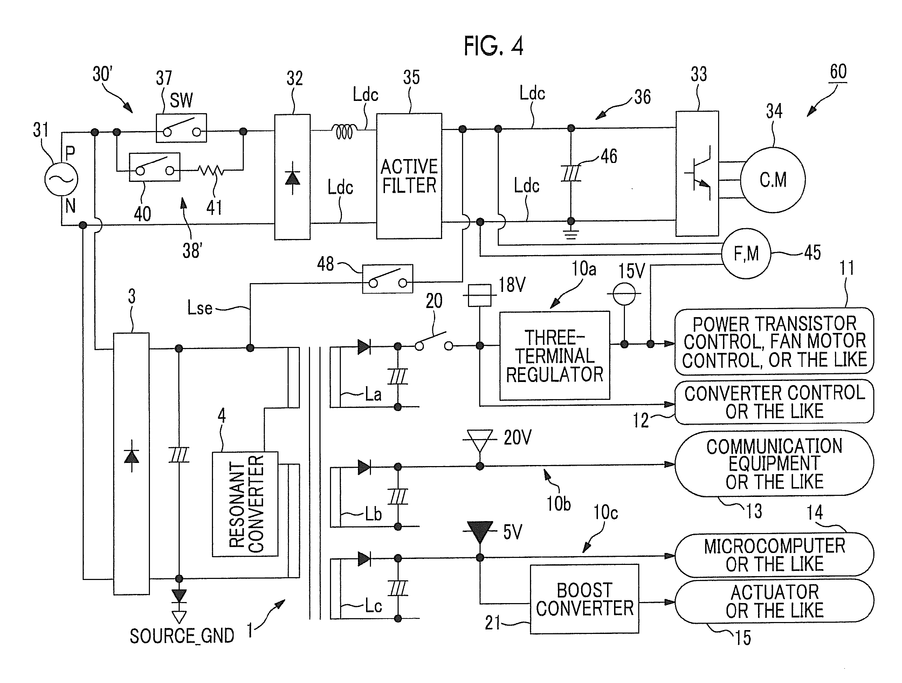

Fig. 4 is a diagram schematically showing the configuration of an air conditioner 60 according to this embodiment. As shown in Fig. 4, the air conditioner 60 in this embodiment is further provided with a fan motor 45 in addition to an air conditioner 50' shown in Fig. 3.

Specifically, an input terminal of the fan motor 45 is connected to the direct-current bus Ldc between the active filter 35 and the inverter circuit 33. In this way, direct-current voltage is supplied to the fan motor 45 as power, and thus the fan motor 45 is driven. Further, a control section (not shown) which controls the fan motor 45 receives a driving source thereof from a 15 V power line of the load circuit 10a.

According to the air conditioner 60, if the fan motor 45 rotates due to a strong wind or the like in a state where electric power supply from the alternating-current power supply 31 is cut off due to, for example, a power failure or by a current breaker (not shown), regenerative electric power thereof is charged to a capacitor 46 of the smoothing circuit 36 of the motor driving device 30'. If a worker touches the motor driving device 30' for the purpose of maintenance or the like in this state, there is a concern that the worker may receive an electric shock by electric charges accumulated in the smoothing capacitor 46.

In order to solve such a problem, in this embodiment, the positive pole side of the direct-current bus Ldc between the active filter 35 and the inverter circuit 33 in the motor driving device 30' and the same potential place in the switching power supply device 1 are connected and a second switch element 48 is provided at a connection line Lse.

In Fig. 4, as an example, the positive pole side of the direct-current bus Ldc and the primary winding side of the switching power supply device 1 are connected. However, if a potential at the time of the stand-by operation mode is the same, it is also possible to connect the connection line Lse to the load circuit side.

According to such a configuration, in a case where electric power supply from the alternating-current power supply 31 is cut off due to a power failure or by a current breaker, the second switch element 48 enters a closed state. In this way, the regenerative electric power of the fan motor 45 is consumed by a load on the switching power supply device 1 side by way of the connection line Lse, whereby accumulation of electric charges in the smoothing capacitor 46 is not performed. In this way, it is possible to prevent an electric shock of a worker at the time of stopping of the motor driving device 30'.

In a state where electric power is supplied from the alternating-current power supply 31 to the motor driving device 30' and the switching power supply device 1, the second switch element 48 enters an open state. In this way, connection of the direct-current bus Ldc and the switching power supply device 1 is cut off, and thus the flow of an electric current through the connection line Lse is cut off.

In addition, in the first and second embodiments described above, a case where the air conditioner is provided with the switching power supply device 1 shown in Fig. 1 has been described. However, instead of this, the air conditioner may be provided with the switching power supply device shown in Fig. 5.

### Reference Signs List

- 1:: switching power supply device
- 2, 31:: alternating-current power supply
- 3, 32:: rectifier circuit
- 4:: resonant converter
- 10a, 10b, 10c:: load circuit
- 11 to 15:: load
- 20:: switch element
- 21:: boost converter
- 23:: three-terminal regulator
- 30, 30':: motor driving device
- 33:: inverter circuit
- 34:: compressor motor
- 35:: active filter
- 36:: smoothing circuit
- 37:: first switch element
- 38, 38':: inrush current suppression circuit
- 45:: fan motor
- 46:: smoothing capacitor
- 48:: second switch element
- 50, 50', 60:: air conditioner

## Claims

1. A switching power supply device that is a multi-output type switching power supply device which supplies an output voltage to each of a plurality of load circuits having a normal operation mode and a stand-by operation mode,
wherein in at least one of the load circuits,
an output voltage is set according to the lowest voltage of voltages of a supply load which is required at the time of the stand-by operation mode, and the output voltage is boosted and supplied in a case where it is necessary to supply a load voltage higher than the output voltage at the time of the normal operation mode.

2. An air conditioner comprising:
a motor driving device which is driven by receiving electric power supply from an alternating-current power supply; and
the switching power supply device according to Claim 1, which receives electric power supply from the alternating-current power supply,
wherein the motor driving device includes
a rectifier circuit which rectifies alternating-current power that is supplied from the alternating-current power supply through an alternating-current bus,
an inverter circuit which converts direct-current power from the rectifier circuit into alternating-current power and outputs the alternating-current power to a motor, and
first switch means which is provided at the alternating-current bus and cuts off electric power supply from the alternating-current power supply to the rectifier circuit,
the switching power supply device receives supply of alternating-current power from a place closer to the alternating-current power supply than the first switch means in the alternating-current bus, and
the first switch means cuts off electric power supply to the rectifier circuit in the stand-by operation mode.

3. The air conditioner according to Claim 2, further comprising:
a smoothing capacitor which is connected to a direct-current bus that connects the rectifier circuit and the inverter circuit;
a fan motor which is connected to the direct-current bus and driven with direct-current power from the direct-current bus as a driving source;
a connection wiring which connects a positive pole side of the direct-current bus and a site having the same potential as the positive pole side of the direct-current bus in the switching power supply device; and
second switch means which is provided at the connection wiring,
wherein in a case of receiving electric power supply from the alternating-current power supply, the second switch means enters an open state, and in a case where electric power supply from the alternating-current power supply is cut off, the second switch means enters a closed state.
